(19) Europäisches Patentamt
European Patent Office
Office européen des brevets

(11) **EP 2 252 911 B1**

(12) **FASCICULE DE BREVET EUROPEEN**

(45) Date de publication et mention
de la délivrance du brevet:
**10.04.2013 Bulletin 2013/15**

(51) Int Cl.:
***G02C 7/06*** *(2006.01)*

(21) Numéro de dépôt: **09728855.9**

(86) Numéro de dépôt international:
**PCT/FR2009/050421**

(22) Date de dépôt: **13.03.2009**

(87) Numéro de publication internationale:
**WO 2009/122073 (08.10.2009 Gazette 2009/41)**

(54) **PROCEDE DE REALISATION D'UN VERRE DE LUNETTES PROGRESSIF**

PROZESS ZUR HERSTELLUNG EINES GLEITSICHTBRILLENGLASES

METHOD OF PRODUCTION OF A PROGRESSIVE GLASSES LENS

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **14.03.2008 FR 0851659**

(43) Date de publication de la demande:
**24.11.2010 Bulletin 2010/47**

(73) Titulaire: **Essilor International (Compagnie Générale d'Optique) 94220 Charenton-le-Pont (FR)**

(72) Inventeurs:
• **DROBE, Björn**
**F-94220 Charenton Le Pont (FR)**
• **PEDRONO, Claude**
**F-94220 Charenton Le Pont (FR)**

(74) Mandataire: **Cabinet Plasseraud 52, rue de la Victoire 75440 Paris Cedex 09 (FR)**

(56) Documents cités:
**EP-A- 1 830 223        EP-A- 1 950 601**
**WO-A-01/62139          WO-A-2006/054985**
**WO-A-2007/068818       WO-A-2007/068819**

• **STEFANIE SCHULDT: "ysis - Natürliches sehen erleben" DEUTSCHE OPTIKER ZEITUNG, XX, DE, no. 5/2004, 1 mai 2004 (2004-05-01), pages 38-43, XP002398937**

**Description**

La présente invention concerne un procédé de réalisation d'un nouveau verre de lunettes progressif.

De façon connue, un verre de lunettes progressif permet de compenser une accommodation insuffisante d'un porteur de ce verre, lorsque ce porteur regarde des objets qui sont situés à des distances variables. Pour cela, le verre progressif présente une puissance optique qui varie pour des directions de regards différentes. Plus précisément, le verre progressif présente, en chaque point de celui-ci correspondant à une direction du regard du porteur, une puissance optique qui est adaptée pour que le porteur voie nettement un objet situé dans cette direction à une distance déterminée. Ainsi, le porteur bénéficie d'une vision optimale à travers un verre progressif s'il acquiert le réflexe d'observer l'objet à travers une partie appropriée du verre, en fonction de l'éloignement de cet objet. Ce réflexe consiste à adapter spontanément la position de sa tête, essentiellement l'inclinaison verticale de sa tête, de sorte que la direction de son regard traverse sensiblement le verre au point où la puissance optique est adaptée à l'éloignement de l'objet.

Lorsqu'un porteur utilise un même verre progressif pendant une durée suffisamment longue, il a acquis un réflexe pour bouger sa tête en fonction de l'éloignement de l'objet qu'il observe, en intégrant spontanément la variation particulière de la puissance optique de ce verre. Cette variation de puissance optique parallèlement au verre, qui est aussi appelée design du verre, est caractérisée par plusieurs paramètres, dont la longueur de progression et la fonction de variation de la puissance optique le long de la ligne méridienne du verre. Ce design peut changer entre des verres progressifs différents bien que ceux-ci correspondent à une même prescription ophtalmique. Pour cette raison, un porteur qui est déjà équipé avec un verre progressif initial peut avoir besoin d'une période d'accoutumance pour s'adapter à un nouveau verre progressif, seulement à cause de la différence de design entre les deux verres.

En fait, toute personne possède un réflexe pour incliner spontanément sa tête en fonction de l'éloignement d'un objet qu'elle observe, même si elle ne porte pas de lunettes. Un tel réflexe provient notamment d'une posture physique qui est plus confortable et provoque moins de fatigue lorsqu'elle est maintenue. L'inclinaison de la tête qui est ainsi adoptée par chacun lorsqu'il regarde un objet dans une direction et à une distance fixées varie donc entre des personnes différentes. Pour cette raison, un nouveau porteur de verre progressif, qui est équipé avec un tel verre pour la première fois, peut aussi être gêné lorsque le design de ce verre ne correspond pas à son réflexe initial d'inclinaison de la tête.

Par ailleurs, les inventeurs ont observé que certaines personnes inclinent précisément leur tête en fonction de la localisation de l'objet qu'elles sont en train de regarder. Autrement dit, elles adoptent successivement des positions pour leur tête qui sont identiques, lorsqu'elles regardent à plusieurs reprises un même objet dans de mêmes conditions.

A l'inverse, d'autres personnes adoptent des positions de tête qui varient pour des conditions d'observation qui restent identiques. Autrement dit, ces dernières personnes ne reprennent pas une même position de leur tête lorsqu'elles regardent à deux moments différents un même objet dans les mêmes conditions.

Un but de la présente invention est donc de fournir un verre de lunettes progressif à un porteur en réduisant une gêne qu'il pourrait ressentir pendant une période d'accoutumance à ce verre.

Pour cela, l'invention propose un procédé de réalisation d'un nouveau verre de lunettes progressif qui est destiné à un porteur presbyte, ce procédé comprenant les étapes suivantes :

/1/ obtenir une caractérisation d'un verre de référence qui est compatible avec une prescription ophtalmique établie pour le porteur, ce verre de référence ayant un design qui correspond à une valeur de référence d'au moins un paramètre postural ayant des valeurs variables pour des positions d'observation distinctes adoptées par le porteur ;

/2/ lorsque le porteur se trouve dans des conditions de correction ophtalmique qui étaient usuelles avant que le nouveau verre progressif soit réalisé, mesurer des valeurs du paramètre postural pour ce porteur lors de placements successifs en position d'observation ;

/3/ calculer une moyenne Pmoy et un écart-type Ect des valeurs mesurées à l'étape /2/, ainsi qu'une moyenne corrigée Pcorr pour ces valeurs mesurées selon la formule :

$$\text{Pcorr} = \text{Pmoy} - (\text{Pmoy} - \text{Pref}) \times \text{EcT}/K$$

Pref désignant la valeur de référence du paramètre postural, et K étant une constante non nulle ;

/4/ en fonction de la moyenne corrigée Pcorr calculée à l'étape /3/, déterminer un design pour le nouveau verre progressif ; et

/5/ réaliser le nouveau verre progressif à partir de la caractérisation du verre de référence, conformément à la prescription ophtalmique et au design déterminé à l'étape /4/.

En outre, selon une caractéristique supplémentaire de l'invention, la valeur de référence Pref du paramètre postural et la constante K sont respectivement une valeur moyenne et un écart-type de valeurs du paramètre postural qui sont déterminées pour un échantillon de population.

Dans le cadre de la présente invention, on entend par paramètre postural un paramètre qui concerne la position, ou posture, adoptée par le porteur pendant une observation visuelle. Un paramètre postural est donc par nature différent d'un paramètre géométrique du verre, d'un paramètre géométrique qui caractérise le port du verre sur le visage du porteur, fixé par la monture de lunettes, ainsi que d'un paramètre physiologique du porteur.

Ainsi, selon l'invention, le nouveau verre ophtalmique progressif qui est fourni au porteur presbyte est réalisé en prenant en compte des mesures qui sont effectuées pour ce porteur. Le nouveau verre est donc personnalisé, en plus des caractéristiques de la prescription ophtalmique, en fonction des postures d'observation du porteur. Ainsi, l'équipement du porteur avec le nouveau verre ne contraint pas le porteur à modifier rapidement ses habitudes posturales. Le porteur ne ressent donc aucune gêne, inconfort ni fatigue lors du changement de correction ophtalmique, qui pourrait résulter d'une nécessité pour lui d'adopter des positions d'observation différentes. Par exemple, la réalisation d'un verre selon le procédé de l'invention peut éviter qu'il ait à modifier l'inclinaison de son buste ou la hauteur de ses mains lorsqu'il lit un livre en utilisant le nouveau verre progressif, par rapport à une habitude qu'il a pu acquérir avec les conditions de correction ophtalmique qui étaient les siennes auparavant.

Plus précisément, l'invention permet d'améliorer le confort du porteur du nouveau verre progressif en lui procurant un design personnalisé, qui réalise un compromis entre les habitudes posturales du porteur et un design de référence fixe. Un tel compromis est particulièrement adapté pour réaliser le nouveau verre à partir d'un verre de référence qui est produit en série. La personnalisation peut alors être apportée lors d'un traitement en reprise du verre de référence, après que les mesures du paramètre postural ont été effectuées pour le porteur auquel le nouveau verre de lunettes est destiné.

L'invention permet aussi de réduire une éventuelle difficulté d'accoutumance du porteur au nouveau verre progressif.

Selon une caractéristique particulièrement avantageuse de l'invention, le nouveau verre progressif est personnalisé en fonction d'une aptitude spontanée, ou d'une facilité, pour le porteur à modifier sa posture pour des conditions d'observation fixées, par exemple pour des conditions de lecture d'un livre. Cet aspect de l'invention résulte de l'étape /3/, selon laquelle des variations de posture qui sont adoptées par le porteur sont caractérisées. De telles variations indiquent, lorsqu'elles sont importantes, que le porteur pourra facilement modifier son habitude posturale lorsqu'il utilisera le nouveau verre progressif. Ce nouveau verre pourra alors être optimisé sur d'autres critères que le maintien des postures d'observation du porteur identiques. Au contraire, de faibles variations pour les valeurs du paramètre postural qui sont mesurées pour le porteur indiquent que celui-ci pourrait ressentir une gêne ou un certain inconfort à changer ses positions habituelles. Le procédé de l'invention privilégie de conserver ses habitudes posturales pour un tel porteur.

Plus précisément, l'aptitude du porteur à modifier sa posture lors d'observations visuelles est caractérisée par l'écart-type des résultats des mesures du paramètre postural qui sont effectuées sur le porteur. Cet écart-type qui est calculé pour le porteur est comparé à un écart-type calculé sur un échantillon de population. La moyenne des valeurs du paramètre postural qui sont mesurées sur le porteur est alors corrigée à partir de la valeur moyenne établie pour l'échantillon de population, en fonction des écarts-types calculés respectivement pour le porteur et pour l'échantillon de population. La moyenne corrigée est utilisée pour déterminer le design du nouveau verre progressif qui est attribué au porteur.

L'invention peut être mise en oeuvre aussi bien pour un porteur qui est équipé pour la première fois d'un verre de lunettes, que pour un porteur qui était déjà équipé initialement d'un verre de lunettes. Dans le premier cas, lorsque le nouveau verre progressif est un premier verre de lunettes pour le porteur, les valeurs du paramètre postural sont mesurées à l'étape /2/ alors que le porteur n'est équipé d'aucun verre de lunettes.

Dans le second cas, lorsque le porteur est déjà équipé d'un verre de lunettes initial avant que le nouveau verre progressif soit réalisé selon la présente invention, ce nouveau verre progressif est destiné à remplacer le verre initial. Les conditions de correction ophtalmique qui sont mises en oeuvre à l'étape /2/, pour mesurer les valeurs du paramètre postural, correspondent alors à l'utilisation du verre initial par le porteur. Autrement dit, ces valeurs du paramètre postural sont mesurées lorsque le porteur est équipé du verre initial. Ainsi, dans de telles circonstances de changement de verre de lunettes, du verre initial au nouveau verre progressif, l'invention permet encore d'éviter que le porteur n'ait à modifier brutalement ses habitudes posturales.

En outre, l'invention peut être mise en oeuvre aussi bien pour un porteur qui est équipé pour la première fois d'un verre progressif, que pour un porteur qui était déjà équipé initialement d'un verre progressif. Autrement dit, le verre de lunettes initial du porteur peut être lui-même déjà un verre progressif, ou non. Dans ce dernier cas, le verre initial peut être un verre unifocal. Dans tous les cas, le procédé de l'invention évite de contraindre le porteur à corriger son réflexe initial de posture, au moins pour ce qui est de lever ou baisser la tête en fonction de l'éloignement d'un objet qu'il est en train d'observer.

Pour raison de clarté de la suite de la description, celle-ci fait référence à une utilisation antérieure d'un verre de lunettes initial par le porteur, qui est destiné à être remplacé par le nouveau verre progressif réalisé selon l'invention. Mais il est entendu que l'invention comprend aussi le cas d'un porteur qui est équipé d'un verre de lunettes pour la première fois. Une telle situation est couverte par la description de l'invention qui est donnée ci-après en considérant que les conditions antérieures de correction ophtalmique du porteur correspondent à l'absence de verre initial.

Enfin, la caractérisation du verre de référence qui est obtenue à l'étape /1/ peut être celle d'un verre fictif, qui est défini numériquement. Une telle caractérisation numérique peut comprendre la fourniture de paramètres géométriques du verre fictif. Ces paramètres peuvent être notamment des valeurs de courbure ou des valeurs de hauteur sagittale qui sont attribuées à des points d'un maillage d'une surface du verre. Dans ce cas, l'étape /5/ de réalisation du nouveau verre progressif peut consister à créer les deux faces du verre dans un bloc vierge de matériau transparent.

Alternativement, le verre de référence qui est caractérisé à l'étape /1/peut se rapporter à un verre semi-fini, mais pas nécessairement. Un tel verre semi-fini peut avoir une face définitive, par exemple la face antérieure de celui-ci. Dans ce cas, le nouveau verre progressif est réalisé à l'étape /5/ en usinant l'autre face du verre semi-fini. Avantageusement, la face définitive du verre semi-fini peut être complexe, c'est-à-dire présenter des variations de courbure, de sorte que l'usinage final de l'autre face soit simplifié.

D'autres particularités et avantages de la présente invention apparaîtront dans la description ci-après d'exemples de mise en oeuvre non limitatifs, en référence aux dessins annexés, dans lesquels :

- la figure 1 est un diagramme synoptique des étapes d'un procédé selon l'invention ;

- la figure 2 illustre différents paramètres posturaux d'un porteur de verre de lunettes ;

- la figure 3 est un diagramme synoptique d'une variante d'un procédé selon l'invention ; et

- la figure 4 est un diagramme montrant des variations de la puissance optique de trois verres progressifs réalisés selon l'invention.

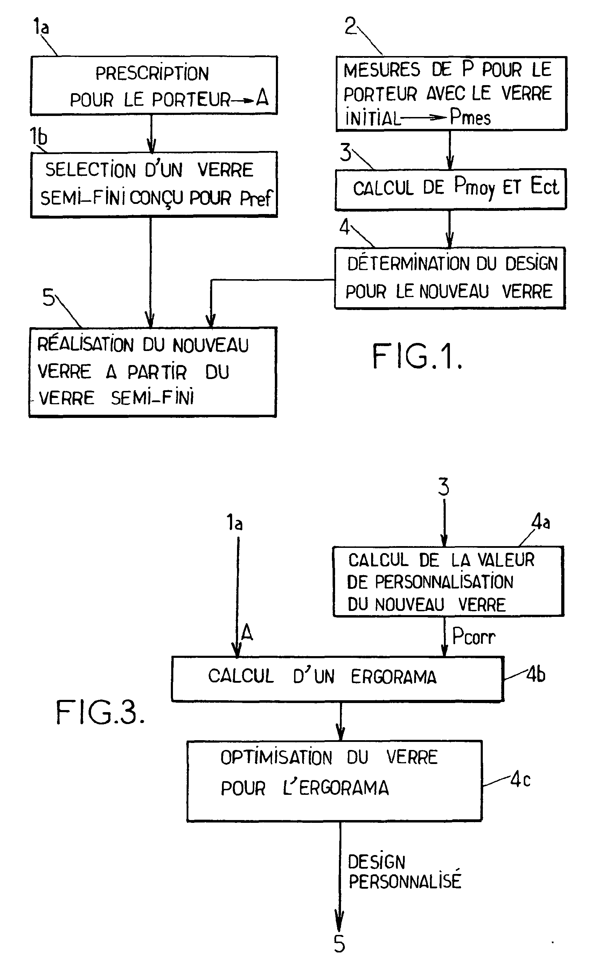

Conformément à l'étape 1 a de la figure 1, une prescription ophtalmique est d'abord établie pour le porteur presbyte. Cette prescription indique notamment une valeur d'addition A, qui correspond à la différence de puissance optique que doit présenter le verre entre deux directions de regard à travers celui-ci, respectivement pour la vision de près et pour la vision de loin. De façon connue, cette différence de puissance optique est déterminée pour pallier l'insuffisance d'accommodation de l'oeil du porteur, pour maintenir une image nette sur sa rétine lorsqu'il regarde successivement un objet qui est éloigné et un objet qui est rapproché.

Le verre ophtalmique fini qui est fourni au porteur peut être réalisé en deux étapes principales. Tout d'abord, une série de verres semi-finis peut être mise à disposition, qui correspondent à des valeurs différentes de l'addition A. Pour cela, chaque verre semi-fini possède une surface définitive, qui peut être celle de la face antérieure du verre, de sa face postérieure, ou d'une interface intermédiaire située entre les faces antérieure et postérieure. Cette surface définitive, à courbure variable, procure au verre fini la valeur d'addition après que la ou les autre(s) surface(s) a (ont) été usinée(s) selon sa (leurs) forme(s) finale(s). L'un de ces verres semi-finis est alors sélectionné, conformément à la valeur d'addition A qui est prescrite pour le porteur (étape 1 b).

D'une façon qui est encore connue, la série de verres semi-finis peut être indexée simultanément par les valeurs d'addition A et par des valeurs d'un autre paramètre, appelée base. La valeur de base d'un verre semi-fini caractérise la courbure moyenne de la face antérieure définitive de ce verre semi-fini, pour la direction de vision de loin. Elle est sélectionnée en fonction de la puissance optique qui est prescrite pour le porteur et pour la vision de loin. Le verre-semi fini peut donc être sélectionné, dans la pratique, simultanément en fonction de la valeur d'addition A qui est prescrite pour le porteur et de la valeur de base qui correspond à sa correction ophtalmique pour la vision de loin.

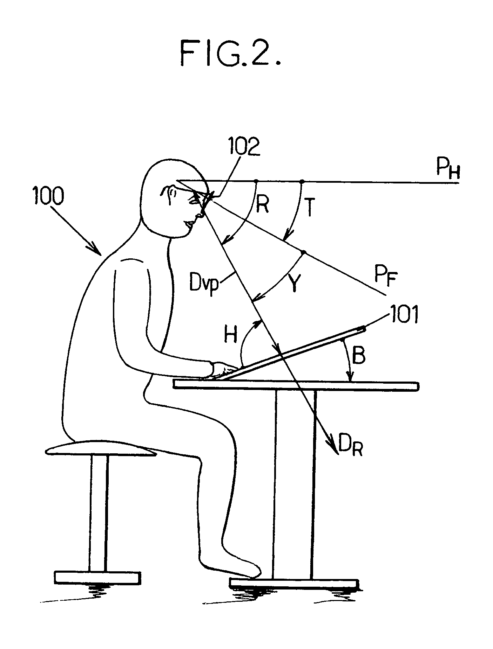

Indépendamment, on caractérise des postures du porteur, par exemple lorsque ce dernier observe un objet déterminé en conditions de vision de près (étape 2). Ces postures peuvent concerner une activité particulière du porteur, pour laquelle il est souhaité que la paire de lunettes soit plus particulièrement adaptée. Par exemple, les postures du porteur peuvent concerner l'observation d'un écran d'affichage d'une unité informatique, ou la lecture d'un livre, appelé document dans la suite. La figure 2 illustre les définitions de plusieurs paramètres posturaux qui peuvent être choisis pour mettre en oeuvre la présente invention. Les notations qui sont utilisées dans cette figure sont les suivantes :

$P_F$ désigne le plan de Francfort qui repère l'inclinaison verticale de la tête,
$P_H$ est un plan horizontal de référence,
T est l'angle d'inclinaison verticale de la tête, mesuré dans un plan vertical entre les plans $P_H$ et $P_F$,

$D_R$ désigne la direction du regard du porteur référencé 100,

R est l'angle d'abaissement du regard, mesuré dans un plan vertical entre le plan $P_H$ et la direction $D_R$,

Y est l'angle d'élévation ou d'abaissement des yeux, mesuré dans un plan vertical entre le plan $P_F$ et la direction $D_R$,

B est l'angle d'inclinaison du document 101 qui est lu par le porteur 100, mesuré dans un plan vertical entre un plan horizontal et le plan du document 101,

H, appelé horoptère, est l'angle mesuré dans un plan vertical entre le plan du document 101 et la direction $D_R$, et Dvp est la distance de lecture en vision de près, mesurée le long de la direction $D_R$ entre les yeux du porteur 100 et l'endroit du document 101 qui est en cours de lecture.

Ces différents paramètres qui caractérisent la posture du porteur 100 sont supposés connus de l'Homme du métier et leurs définitions ne sont pas reprises en détail ici. On pourra se reporter dans ce but aux documents WO 2007/068818 ou WO 2007/068819 notamment.

Le document WO2007068819 tient compte de paramètres posturaux, soit mesurés soit fixés selon leur valeur moyenne, dans le but de définir la probabilité d'occurrence de déviation du regard pour un abaissement donné.

Par ailleurs, le document EP1830223 décrit la mesure de la stabilité du paramètre postural.

Le document WO01621139 décrit la mesure d'un paramètre postural comme l'inclinaison de la tête et le fait de tenir compte de la moyenne et de la déviation standard pour calculer la valeur maximum de ce paramètre.

Ces paramètres peuvent être mesurés, par exemple, en équipant le porteur 100 et le document 101 de balises visuelles qui sont repérées sur des photographies prises lorsque le porteur se place en position de lecture. Pour caractériser de façon statistique des valeurs de ces paramètres, le porteur 100 est placé en position de lecture et une série de mesures est réalisée. Alternativement, le porteur 100 peut se placer en position de lecture à plusieurs reprises, par exemple après s'être levé entre deux placements successifs, et les positions des balises sont repérées à chaque fois. Pour chaque placement, des valeurs de l'un au moins des paramètres posturaux cités ci-dessus sont mesurées. Ces valeurs mesurées sont notées Pmes. Eventuellement, les valeurs Pmes qui sont mesurées pour chaque placement du porteur 100 peuvent se rapporter à plusieurs des paramètres précédents, ou être dérivées de certains au moins de ceux-ci. Par exemple, le paramètre postural choisi peut être un taux Gt de participation de la tête du porteur 100 à un mouvement vertical de regard, défini par Gt = T/R. Le lecteur comprendra que d'autres méthodes de mesure du paramètre postural désiré peuvent être utilisées alternativement. Pour cela, il pourra se référer aux ouvrages connus qui décrivent de telles méthodes.

On calcule ensuite un écart-type Ect des valeurs mesurées Pmes pour les mesures réalisées en série pour le porteur 100, ou pour la série de placements de celui-ci (étape 3 de la figure 1), selon la formule :

$$Ect = \frac{1}{N} \times \sqrt{\sum_{i}^{N} (Pmes_i - Pmoy)^2} \qquad (1)$$

où N est le nombre de placements effectués, i est le numéro du placement correspondant à chaque mesure et Pmoy est une moyenne des valeurs mesurées Pmes. En particulier, on pourra calculer Pmoy selon la formule suivante :

$$Pmoy = \frac{1}{N} \times \sqrt{\sum_{i}^{N} Pmes_i} \qquad (2)$$

Lors de la réalisation des mesures du (des) paramètre(s) postural(aux) pour le porteur 100, celui-ci est équipé le cas échéant de son verre de lunettes initial 102 (figure 2). De cette façon, les valeurs Ect et Pmoy qui sont calculées prennent en compte une éventuelle adaptation de la posture à l'utilisation du verre 102.

Evidemment, lorsque le porteur 100 est équipé d'un verre de lunettes pour la première fois, les mesures sont effectuées lorsque le porteur 100 ne porte pas de verre de lunettes. On comprendra que le principe de l'invention est de réaliser les mesures du (des) paramètre(s) postural(aux) en replaçant le porteur 100 dans des conditions d'observation, avec ou sans verre initial 102, qui correspondent à son habitude antérieure.

On détermine alors le design du nouveau verre progressif à réaliser pour le porteur 100 à partir de la valeur de l'écart-type Ect qui a été calculée pour ce porteur, et aussi à partir de la moyenne Pmoy (étape 4 de la figure 1). Plusieurs méthodes alternatives peuvent être utilisées à ce propos, dont deux sont décrites dans la suite à titre d'exemples.

De façon générale, on calcule d'abord une valeur Pcorr du paramètre postural, qui est utile pour calculer ou sélectionner ensuite le design du nouveau verre progressif (étape 4a de la figure 3). Cette valeur Pcorr représente la personnalisation du nouveau verre. Elle est calculée pour chaque porteur à partir d'une valeur de référence Pref qui est associée au verre semi-fini, et plus généralement au verre de référence, qui a été sélectionné à l'étape 1 b. Elle est donnée par la formule suivante :

$$Pcorr = Pmoy - (Pmoy - Pref) \times EcT/K \qquad (3)$$

où K est une constante non nulle. Ainsi, la valeur Pcorr est égale à la moyenne Pmoy des valeurs du paramètre postural mesurées pour le porteur lorsque celles-ci sont faiblement dispersées, c'est-à-dire lorsque leur écart-type EcT est presque nul. A l'inverse, lorsque les valeurs mesurées pour le porteur présentent un écart-type qui est proche de la constante K, la moyenne corrigée Pcorr devient presqu'égale à la valeur de référence Pref. En ce sens, la formule 3 réalise une correction de la moyenne Pmoy calculée pour le porteur, à partir de la valeur de référence Pref et de la constante K, dans une mesure qui dépend de la répétabilité de la posture adoptée par le porteur.

Pour la mise en oeuvre de l'invention qui est décrite ici, selon laquelle le verre de référence est un verre semi-fini qui est sélectionné en fonction de la valeur d'addition A qui a été prescrite pour le porteur, la valeur de Pref est associée au design de la face définitive du verre semi-fini.

Selon l'invention, la valeur de référence Pref et la constante K sont déterminées statistiquement sur un échantillon de population. La distribution statistique des valeurs du paramètre postural qui sont mesurées successivement pour le porteur est donc comparée à une distribution statistique des valeurs du même paramètre déterminée sur un ensemble de personnes.

Ainsi, la valeur de référence Pref correspond à une valeur moyenne du paramètre postural qui est déterminée à partir de l'échantillon de population.

Simultanément, la constante K est égale à un écart-type des valeurs du paramètre postural qui sont déterminées pour les personnes de cet échantillon de population.

L'échantillon de population peut être, en particulier, un ensemble de porteurs non presbytes qui sont placés en condition de vision de près. Ces porteurs de l'échantillon de population peuvent éventuellement être équipés de verres unifocaux adaptés à leurs vues respectives. Dans ce cas, le verre de référence qui est sélectionné à l'étape 1 b possède un design qui est adapté pour un porteur qui est équipé d'un verre progressif pour la première fois. Les inventeurs donnent alors les exemples suivants pour les valeurs de Pref, selon le paramètre postural qui est pris en considération :

- valeur de référence Pref pour la distance de lecture en vision de près Dvp : 348 mm ;
- valeur de référence Pref pour l'angle d'abaissement des yeux en vision de près Y : 22 degrés ;
- valeur de référence Pref pour l'horoptère H : 77,5 degrés ; et
- valeur de référence Pref pour le taux de participation de la tête à un mouvement vertical de regard Gt : 0,71.

Alternativement, la valeur de référence Pref peut aussi être déterminée sur un ensemble de porteurs dont certains au moins peuvent être presbytes. Dans ce cas, le design de référence pourra être initialement plus proche du design final du nouveau verre progressif qui sera fourni au porteur.

La valeur de référence Pref peut en outre être mise à jour en fonction d'une modification de l'échantillon de population qui sert à établir cette valeur. Dans ce cas, un procédé selon l'invention peut comprendre en outre une étape préalable d'actualisation de la valeur de référence Pref du paramètre postural qui est considéré. Notamment, cette actualisation peut être réalisée sur la base d'un nouvel échantillon de population qui est accru par rapport à un échantillon de population antérieur à partir duquel une valeur de référence a été établie antérieurement pour le même paramètre postural.

La première méthode de détermination du design du nouveau verre progressif qui est rapportée ici comprend les deux sous-étapes suivantes :

- déterminer un ergorama à partir de la valeur corrigée Pcorr (étape 4b de la figure 3) ; et

- optimiser numériquement le nouveau verre progressif en utilisant une partie au moins de l'ergorama comme cible d'optimisation (étape 4c de la figure 3).

Pour une définition précise de l'ergorama, on pourra se reporter au document WO 2007/068819 déjà cité. On rappelle juste ici qu'un ergorama associe une valeur de puissance optique à chaque direction d'observation à travers le nouveau verre progressif à réaliser. L'ergorama est établi en associant d'abord une valeur de la distance d'observation à chaque direction du regard du porteur à travers le verre. Cette association est établie à partir de la valeur personnalisée Pcorr qui est calculée pour le paramètre postural choisi, de façon à tenir compte des positionnements spontanés du porteur 100. La valeur de puissance optique pour chaque direction du regard est ensuite déduite de la prescription établie pour le porteur 100, et de la distance d'observation pour cette direction. A partir de l'ergorama, le verre progressif est optimisé d'une façon qui est connue de l'Homme du métier. Le design personnalisé du nouveau verre progressif est ainsi obtenu.

Selon la seconde méthode de détermination du design du nouveau verre progressif, celui-ci est sélectionné parmi un ensemble de designs qui sont indexés par des valeurs du paramètre postural, conformément à la valeur corrigée Pcorr. Pour réduire le délai de fourniture du verre fini au porteur, ces designs peuvent avoir été calculés préalablement pour toute une série de couples de valeurs d'addition A et de paramètre postural P, puis stockés sur un support d'enregistrement de données adapté. Le design qui correspond aux valeurs d'addition A et de moyenne corigée Pcorr qui ont été déterminées pour le porteur dont on renouvelle les verres de lunettes est alors lu à partir du support de données.

De façon générale selon l'invention, diverses caractéristiques du design du nouveau verre progressif peuvent varier en fonction de la sélection qui prend en compte la moyenne corrigée Pcorr calculée pour le porteur, à valeur d'addition A constante. Par exemple, le design du nouveau verre progressif peut comprendre une longueur de progression et/ou une fonction de variation de la puissance optique le long d'une ligne méridienne du nouveau verre, qui est (sont) elle(s)-même(s) variable(s) en fonction de la moyenne corrigée Pcorr calculée à partir des valeurs du paramètre postural mesurées pour le porteur.

Le tableau 1 ci-dessous regroupe les valeurs de référence Pref et d'écarts-types K qui ont été déterminées à partir d'un groupe de 108 porteurs non-presbytes, pour les trois paramètres posturaux de distance de lecture Dvp, d'horoptère H et de taux de participation de la tête à un mouvement vertical du regard Gt, et pour une activité de lecture sur table :

Tableau 1

|  | Dvp (mm) | H (°) | Gt |
|---|---|---|---|
| Pref | 348 | 77,5 | 0,71 |
| K | 53,4 | 10,05 | 0,054 |

Le tableau 2 ci-dessous regroupe, pour chacun des trois paramètres posturaux du tableau 1 et pour trois porteurs différents pour lesquels les valeurs d'addition prescrites A sont identiques, égales à 2,00 dioptries, la moyenne des valeurs mesurées Pmoy, l'écart-type calculé Ect, et la valeur Pcorr calculée selon la formule 3 :

Tableau 2

|  |  | Dvp (mm) | H (degrés) | Gt |
|---|---|---|---|---|
| **Porteur 1** | Pmoy | 440 | 61,1 | 0,43 |
|  | Ect | 33,1 | 5,60 | 0,044 |
|  | Pcorr | 386 | 70,23 | 0,66 |
| **Porteur 2** | Pmoy | 367 | 65,56 | 0,63 |
|  | Ect | 42,12 | 9,11 | 0,025 |
|  | Pcorr | 352 | 76,38 | 0,67 |
| **Porteur 3** | Pmoy | 432 | 51,9 | 0,41 |
|  | Ect | 31,14 | 3,19 | 0,018 |
|  | Pcorr | 383 | 60,00 | 0,51 |

Les valeurs de Ect qui sont indiquées pour les trois porteurs montrent que le porteur 3 adopte des postures de lecture qui sont plus répétitives. Pour cette raison, ce porteur est susceptible de s'adapter plus difficilement à un nouveau verre progressif dont le design serait optimisé pour des postures différentes.

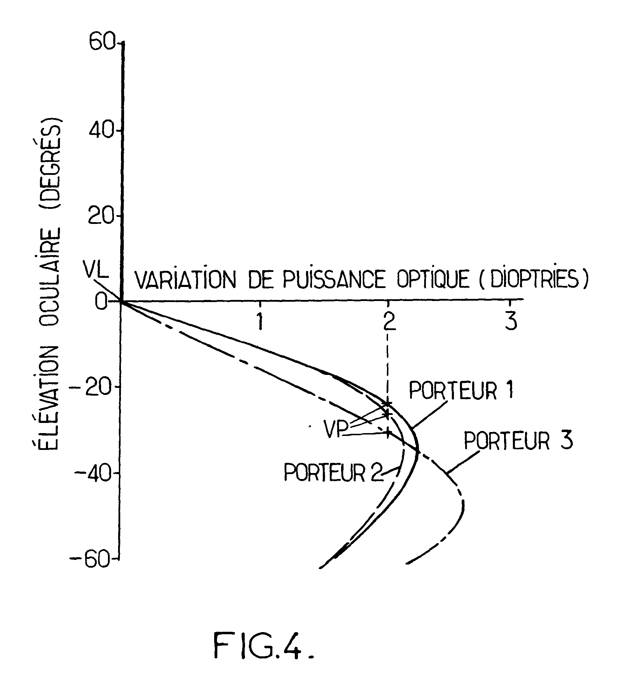

La figure 4 est un diagramme qui montre les variations respectives de la puissance optique de trois nouveaux verres progressifs, qui ont été réalisés selon l'invention pour les trois porteurs du tableau 2. Ces variations de puissance optique sont identifiées en suivant la ligne méridienne principale des verres, c'est-à-dire pour des directions de regard à travers ces verres qui varient dans un plan vertical. L'axe des ordonnées repère la direction de regard, en fonction de l'angle de celle-ci par rapport à la direction de regard horizontale. Les inventeurs rappellent que, le plus souvent, le verre de lunettes est assemblé dans la monture de lunettes de sorte que cette direction de regard horizontale traverse le verre au niveau de la croix de montage. Cette croix de montage peut aussi correspondre à la direction qui est prise pour référence pour la vision de loin. Pour cette raison, elle est notée VL sur la figure. Ainsi, l'axe des ordonnées repère l'angle Y d'élévation oculaire, exprimé en degrés. L'axe d'abscisse repère la variation de puissance optique par rapport à la direction de regard horizontale. On remarque en particulier que pour le porteur 3, la puissance optique continue à augmenter au-delà de la valeur d'addition lorsque la direction du regard est plus basse de la direction de référence pour la vision de près, notée VP. Cette adaptation du verre correspond notamment à l'habitude du porteur 3 à peu baisser la tête (faible valeur de Pmoy pour Gt) avec une reproductibilité d'inclinaison de la tête qui est élevée (faible valeur de Ect pour Gt).

Le nouveau verre progressif est alors réalisé à partir du design personnalisé qui a été calculé ou sélectionné, d'une façon qui est connue de l'Homme métier. Dans la mise en oeuvre particulière de l'invention qui est décrite ici, le verre semi-fini est usiné sur sa face autre que celle qui est créée définitivement lors de la production en série du verre semi-fini.

Il est entendu que le procédé de l'invention qui vient d'être décrit en détail peut être modifié sous plusieurs aspects, tout en conservant certains au moins des avantages de l'invention. En particulier, les variations des valeurs Pmes qui sont mesurées pour le porteur peuvent être caractérisées en sélectionnant le plus grand des écarts absolus calculés entre deux quelconques de ces valeurs, ou le plus grand des écarts entre l'une quelconque des valeurs Pmes qui sont mesurées et la valeur moyenne correspondante Pmoy.

## Revendications

1. Procédé de réalisation d'un nouveau verre de lunettes progressif destiné à un porteur presbyte (100), le procédé comprenant les étapes suivantes :

   /1/ obtenir une caractérisation d'un verre de référence compatible avec une prescription ophtalmique établie pour le porteur (100), ledit verre de référence ayant un design correspondant à une valeur de référence (Pref) d'au moins un paramètre postural, ledit paramètre postural ayant des valeurs variables pour des positions d'observation distinctes adoptées par le porteur ;
   /2/ lorsque le porteur (100) se trouve dans des conditions de correction ophtalmique usuelles avant que ledit nouveau verre progressif soit réalisé, mesurer des valeurs (Pmes) dudit paramètre postural pour ledit porteur lors de placements successifs en position d'observation ;
   /3/ calculer une moyenne Pmoy et un écart-type Ect des valeurs (Pmes) mesurées à l'étape /2/, ainsi qu'une moyenne corrigée Pcorr pour les dites valeurs mesurées selon la formule :

$$Pcorr = Pmoy - (Pmoy - Pref) \times EcT/K$$

   Pref désignant la valeur de référence du paramètre postural, et K étant une constante non nulle ;
   /4/ en fonction de la moyenne corrigée Pcorr calculée à l'étape /3/, déterminer un design pour le nouveau verre progressif ; et
   /5/ réaliser le nouveau verre progressif à partir de la caractérisation du verre de référence, conformément à la prescription ophtalmique et au design déterminé à l'étape /4/ ;

   procédé suivant lequel la valeur de référence Pref du paramètre postural et la constante K sont respectivement une valeur moyenne et un écart-type de valeurs du paramètre postural déterminées pour un échantillon de population.

2. Procédé selon la revendication 1, suivant lequel le nouveau verre de lunettes progressif est destiné à remplacer un verre de lunettes initial (102) utilisé par le porteur, et suivant lequel les conditions de correction ophtalmique mises en oeuvre à l'étape /2/, usuelles avant que ledit nouveau verre progressif soit réalisé, correspondent à une utilisation dudit verre initial (102).

3. Procédé selon la revendication 1 ou 2, suivant lequel le design du nouveau verre progressif déterminé à l'étape /4/ comprend une longueur de progression et/ou une fonction de variation de puissance optique le long d'une ligne méridienne dudit nouveau verre progressif, ladite longueur de progression et/ou ladite fonction de variation de puissance optique étant elles-mêmes variables en fonction de la moyenne corrigée Pcorr calculée à l'étape /3/.

**4.** Procédé selon l'une quelconque des revendications 1 à 3, suivant lequel le design du nouveau verre progressif est déterminé à l'étape /4/ en effectuant les deux sous-étapes suivantes :

/4-1/ déterminer un ergorama à partir de la valeur de la moyenne corrigée Pcorr calculée à l'étape /3/, ledit ergorama associant une valeur de puissance optique à chaque direction d'observation à travers le nouveau verre progressif ; et

/4-2/ optimiser numériquement le nouveau verre progressif en utilisant une partie au moins de l'ergorama comme cible d'optimisation.

**5.** Procédé selon l'une quelconque des revendications 1 à 3, suivant lequel l'étape /4/ comprend une sélection du design du nouveau verre progressif parmi un ensemble de designs indexés par des valeurs (P) du paramètre postural, conformément à la valeur de la moyenne corrigée Pcorr calculée à l'étape /3/.

**6.** Procédé selon l'une quelconque des revendications précédentes, suivant lequel le paramètre postural est choisi parmi une distance de lecture en vision de près (Dvp), un angle d'élévation ou d'abaissement des yeux en vision de près (Y), un horoptère en vision de près (H), ou un taux de participation de tête à un mouvement vertical de regard, ou est dérivé de certains au moins de ces paramètres.

**7.** Procédé selon l'une quelconque des revendications précédentes, suivant lequel l'échantillon de population utilisé pour déterminer la valeur de référence (Pref) du paramètre postural est un ensemble de porteurs non presbytes placés en condition de vision de près.

**8.** Procédé selon l'une quelconque des revendications précédentes, comprenant en outre une étape préalable d'actualisation de la valeur de référence (Pref) du paramètre postural, sur la base d'un nouvel échantillon de population accru par rapport à un échantillon de population antérieur à partir duquel une valeur de référence a été établie antérieurement pour ledit paramètre postural.

**9.** Procédé selon l'une quelconque des revendications 1 à 8, suivant lequel le paramètre postural est une distance de lecture en vision de près (Dvp), et la valeur de référence (Pref) dudit paramètre postural est 348 mm.

**10.** Procédé selon l'une quelconque des revendications 1 à 8, suivant lequel le paramètre postural est un angle d'abaissement des yeux en vision de près (Y), et la valeur de référence (Pref) dudit paramètre postural est 22 degrés.

**11.** Procédé selon l'une quelconque des revendications 1 à 8, suivant lequel le paramètre postural est un horoptère en vision de près (H), et la valeur de référence (Pref) dudit paramètre postural est 77,5 degrés.

**12.** Procédé selon l'une quelconque des revendications 1 à 8, suivant lequel le paramètre postural est un taux de participation de tête à un mouvement vertical de regard, et la valeur de référence (Pref) dudit paramètre postural est 0,71.

**13.** Procédé selon l'une quelconque des revendications précédentes, suivant lequel le verre de référence est un verre semi-fini ayant une face définitive, et le nouveau verre progressif est réalisé à l'étape /5/ en usinant une autre face dudit verre semi-fini.

## Claims

**1.** Method of producing a new progressive spectacle eyeglass intended for a presbyopic wearer (100), the method comprising the following steps:

11/ obtaining a characterisation of a reference eyeglass that is compatible with an ophthalmic prescription drawn up for the wearer (100), said reference eyeglass having a design corresponding to a reference value (Pref) for at least one postural parameter, said postural parameter having values varying for distinct observation positions adopted by the wearer;

/2/ when the wearer (100) is under ophthalmic correction conditions that were usual before the new progressive eyeglass is produced, measuring values (Pmes) of said postural parameter for said wearer during successive placements in observation position;

/3/ calculating a mean Pmean and a standard deviation SD of the values (Pines) measured in step /2/, and a corrected mean Pcorr for said values measured in accordance with the formula:

$$Pcorr = Pmean - (Pmean - Pref) \times SD/K$$

Pref standing for the reference value of the postural parameter and K being a non-zero constant;

/4/ depending on the corrected mean Pcorr calculated in step /3/, determining a design for the new progressive eyeglass; and

/5/ producing the new progressive eyeglass from the characterisation of the reference eyeglass, in accordance with the ophthalmic prescription and the design determined in step /4/;

method wherein the reference value Pref of the postural parameter and the constant K are respectively a mean value and a standard deviation of values of the postural parameter determined for a population sample.

2.  Method according to claim 1, wherein the new progressive spectacle eyeglass is intended to replace an initial spectacle eyeglass (102) used by the wearer, and wherein the ophthalmic correction conditions implemented in step /2/, usual before said new progressive eyeglass is produced, correspond to a use of said initial eyeglass (102).

3.  Method according to claim 1 or 2, wherein the design of the new progressive eyeglass determined in step /4/ comprises a progression length and/or a function of variation of optical power along a meridian line of said new progressive eyeglass, said progression length and/or said function of variation of optical power being themselves variable as functions of the corrected mean Pcorr calculated at step /3/.

4.  Method according to any one of claims 1 to 3, wherein the design of the new progressive eyeglass is determined in step /4/ by performing the following two substeps:

    /4-1/ determining an ergorama from the value of the corrected mean Pcorr calculated in step /3/, said ergorama associating an optical power value with each observation direction through the new progressive eyeglass; and

    /4-2/ numerically optimizing the new progressive eyeglass using at least part of the ergorama as an optimisation target.

5.  Method according to any one of claims 1 to 3, wherein step /4/ comprises a selection of the design of the new progressive eyeglass from a set of designs indexed by values (P) of the postural parameter, in accordance with the value of the corrected mean Pcorr calculated in step /3/.

6.  Method according to any one of the preceding claims, wherein the postural parameter is selected from a reading distance in near vision (Dvp), an angle of elevation or lowering of the eyes in near vision (Y), a horopter in near vision (H), or a ratio of participation of the head to a vertical gaze movement, or is derived from at least some of these parameters.

7.  Method according to any one of the preceding claims, wherein the population sample used for determining the reference value (Pref) of the postural parameter is a set of non-presbvopic wearers placed in near vision condition.

8.  Method according to any one of the preceding claims, further comprising a prior step of updating the reference value (Pref) of the postural parameter, on the basis of a new population sample increased with respect to a previous population sample from which a reference value was previously established for said postural parameter.

9.  Method according to any one of claims 1 to 8, wherein the postural parameter is a near-vision reading distance (Dvp), and the reference value (Pref) of said postural parameter is 348 mm.

10. Method according to any one of claims 1 to 8, wherein the postural parameter is an angle of lowering of the eyes in near vision (Y), and the reference value (Pref) of said postural parameter is 22 degrees.

11. Method according to any one of claims 1 to 8, wherein the postural parameter is a near-vision horopter (H), and reference value (Pref) of said postural parameter is 77.5 degrees.

12. Method according to any one of the claims 1 to 8, wherein the postural parameter is a ratio of participation of the head to a vertical gaze movement, and the reference value (Pref) of said postural parameter is 0.71.

**13.** Method according to any one of the preceding claims, wherein the reference eyeglass is a semi-finished eyeglass having a final face, and the new progressive eyeglass is produced in step /5/ by machining another face of said semi-finished eyeglass.

**Patentansprüche**

**1.** Verfahren zur Herstellung eines neuen Gleitsicht-Brillenglases, das für einen alterssichtigen Träger (100) bestimmt ist, wobei das Verfahren die folgenden Schritte umfasst:

1) Erhalten einer Charakterisierung eines Referenz-Glases, das kompatibel ist mit einer für den Träger (100) aufgestellten ophtalmischen Verschreibung, wobei das Referenz-Glas eine Gestaltung aufweist, die einem Referenzwert (Pref) von wenigstens einem Haltungsparameter entspricht, wobei der Haltungsparameter variable Werte für unterschiedliche, von dem Träger eingenommene Beobachtungspositionen aufweist,
2) Messen von Werten (Pmes) des Haltungsparameters für den Träger bei aufeinanderfolgenden Platzierungen in eine Beobachtungsposition, wenn der Träger (100) sich unter üblichen ophtalmischen Korrekturbedingungen befindet, bevor das neue Gleitsicht-Glas hergestellt wird,
3) Berechnen eines Mittelwerts Pmoy und einer Standardabweichung Ect von im Schritt 2) gemessenen Werten (Pmes) sowie eines korrigierten Mittelwerts Pcorr für die gemessenen Werte nach der Formel:

$$Pcorr = Pmoy - (Pmoy - Pref) \times EcT/K$$

wobei Pref den Referenzwert des Haltungsparameters bezeichnet und K eine von Null verschiedene Konstante ist,
4) Bestimmen einer Gestaltung für das neue Gleitsicht-Glas in Abhängigkeit von dem korrigierten Mittelwert Pcorr, der im Schritt 3) berechnet wird, und
5) Herstellen des neuen Gleitsicht-Glases ausgehend von der Charakterisierung des Referenz-Glases, konform zu der ophtalmischen Verschreibung und zu der im Schritt 4) bestimmten Gestaltung,

wobei bei dem Verfahren der Referenzwert Pref des Haltungsparameters und die Konstante K ein Mittelwert bzw. eine Standardabweichung von Werten des Haltungsparameters sind, die für eine Bevölkerungs-Probegruppe bestimmt wurden.

**2.** Verfahren nach Anspruch 1, wobei das neue Gleitsicht-Brillenglas dazu bestimmt ist, ein anfängliches Brillenglas (102) zu ersetzen, das von dem Träger verwendet wird, und wobei die vor der Herstellung des neuen Gleitsicht-Glases üblichen ophtalmischen Korrekturbedingungen, die im Schritt 2) umgesetzt werden, einer Verwendung von dem anfänglichen Glas (102) entsprechen.

**3.** Verfahren nach Anspruch 1 oder 2, wobei die Gestaltung von dem neuen Gleitsicht-Glas, die im Schritt 4) bestimmt wird, eine Progressionslänge oder/und eine Funktion der Variation der Brechkraft entlang einer Meridian-Linie von dem neuen Gleitsicht-Glas ist, wobei die Progressionslänge oder/und die Funktion der Variation der Brechkraft selbst in Abhängigkeit von dem korrigierten Mittelwert Pcorr variabel sind, der im Schritt 3) berechnet wird.

**4.** Verfahren nach einem der Ansprüche 1 bis 3, wobei die Gestaltung des neuen Gleitsicht-Glases im Schritt 4) bestimmt wird, indem die folgenden zwei Unterschritte durchgeführt werden:

4-1) Bestimmen eines Ergoramas, ausgehend von dem korrigierten Mittelwert Pcorr, der im Schritt 3) berechnet wird, wobei das Ergorama jeder Beobachtungsrichtung durch das neue Gleitsicht-Glas einen Brechkraft-Wert zuordnet, und
4-2) numerisches Optimieren des neuen Gleitsicht-Glases unter Verwendung von wenigstens einem Teil des Ergoramas als Optimierungsziel.

**5.** Verfahren nach einem der Ansprüche 1 bis 3, wobei der Schritt 4) eine Auswahl der Gestaltung des neuen Gleitsicht-Glases aus einer Menge von Gestaltungen umfasst, die durch Werte (P) des Haltungsparameters indiziert sind, konform zu dem Wert des korrigierten Mittelwerts Pcorr, der im Schritt 3) berechnet wird.

6.  Verfahren nach einem der vorhergehenden Ansprüche, wobei der Haltungsparameter ausgewählt ist aus einer Lesedistanz bei Nahsicht (Dvp), einem Winkel, unter dem die Augen bei Nahsicht (Y) angehoben oder gesenkt sind, einem Horopter bei Nahsicht (H) oder einem Anteil der Teilnahme des Kopfes an einer vertikalen Blick-Bewegung, oder aus wenigstens gewissen dieser Parameter abgeleitet ist.

7.  Verfahren nach einem der vorhergehenden Ansprüche, wobei die Bevölkerungs-Probegruppe, die verwendet wird, um den Referenzwert (Pref) des Haltungsparameters zu bestimmen, eine Menge von nichtalterssichtigen Trägern sind, die unter eine Nahsicht-Bedingung versetzt werden.

8.  Verfahren nach einem der vorhergehenden Ansprüche, weiterhin umfassend einen vorherigen Schritt der Aktualisierung des Referenzwerts (Pref) des Haltungsparameters auf Basis einer neuen Bevölkerungs-Probegruppe, die in Bezug auf eine vorherige Bevölkerungs-Probegruppe erhalten wird, ausgehend von welcher zuvor ein Referenzwert für den Haltungsparameter etabliert wurde.

9.  Verfahren nach einem der Ansprüche 1 bis 8, wobei der Haltungsparameter eine Lesedistanz bei Nahsicht (Dvp) ist, und der Referenzwert (Pref) von dem Haltungsparameter 348 mm beträgt.

10. Verfahren nach einem der Ansprüche 1 bis 8, wobei der Haltungsparameter ein Winkel ist, unter dem die Augen bei Nahsicht gesenkt werden (Y), und der Referenzwert (Pref) von dem Haltungsparameter 22° beträgt.

11. Verfahren nach einem der Ansprüche 1 bis 8, wobei der Haltungsparameter ein Horopter bei Nahsicht (H) ist, und der Referenzwert (Pref) von dem Haltungsparameter 77,5° beträgt.

12. Verfahren nach einem der Ansprüche 1 bis 8, wobei der Haltungsparameter ein Anteil der Teilnahme des Kopfes an einer vertikalen Blick-Bewegung ist, und der Referenzwert (Pref) von dem Haltungsparameter 0,71 beträgt.

13. Verfahren nach einem der vorhergehenden Ansprüche, wobei das Referenz-Glas ein halbfertiges Glas ist, das eine fertige Seite hat, und das neue Gleitsicht-Glas im Schritt 5) durch Bearbeitung einer anderen Seite von dem halbfertigen Glas hergestellt wird.

FIG.1.

FIG.3.

# FIG.2.

FIG.4.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007068818 A
- WO 2007068819 A
- EP 1830223 A
- WO 01621139 A